# EUROPEAN PATENT SPECIFICATION

(11) **EP 4 268 686 B1**
(45) Date of publication and mention of the grant of the patent: **29.05.2024**
(21) Application number: 23168398.8
(22) Date of filing: 18.04.2023
(51) Int. Cl.: A47J 31/44, A47J 31/00

(54) **COFFEE MACHINE ASSEMBLY WITH MILK JUG IDENTIFICATION SYSTEM**
KAFFEEMASCHINENANORDNUNG MIT MILCHKANNENIDENTIFIKATIONSSYSTEM
ENSEMBLE MACHINE À CAFÉ AVEC SYSTÈME D'IDENTIFICATION DE RÉCIPIENT À LAIT

(30) Priority: 26.04.2022 IT 202200008201
(43) Date of publication of application: 01.11.2023
(73) Proprietor: SIMONELLI GROUP S.P.A., 62020 Belforte del Chienti (MC) (IT)
(72) Inventor: CINGOLANI, Claudio Enrico, 62032 Camerino (MC) (IT); PARRINI, Mauro, 63821 Porto Sant'Elpidio (FM) (IT)
(74) Representative: Cutropia, Gianluigi

(56) References cited:
- EP-A1- 2 389 848
- WO-A1-2018/211003
- WO-A1-2020/049495
- US-A1- 2020 390 273

## Description

The present invention relates to a coffee machine assembly with an identification system of a milk jug.

Professional coffee machines are known for the production of coffee and/or milk-based beverages. Such a coffee machine comprises one or more dispensing units. Each dispensing unit has a nozzle to dispense pressurized hot water for extracting the coffee from a filter holder that is disposed under the dispensing nozzle.

Coffee machines also comprise one or more dispensing nozzles for dispensing the hot steam used to heat and froth the milk contained in a milk jug.

More and more often, such coffee machines are used in catering establishments where the bartender turnover is very high and very often the operators are not properly trained to perform the correct workflow of a proper preparation procedure of milk-based beverages. In addition, customers generally require the beverage to be prepared in a very short time. Therefore, the preparation procedure of a milk-based beverage should be as straightforward as possible and should not lead to errors.

Generally, a coffee machine is equipped with different types of milk jugs according to the quantity of milk they are to contain. Consequently, the dispensing time and the temperature of the steam delivered by the dispensing nozzle varies according to the quantity of milk contained in the milk jug.

In addition to steam, the bartender injects air into the milk through the steam nozzle, holding the dispensing spout of the nozzle close to the surface of the milk in order to incorporate and push the air in the milk by means of the steam. Such a system requires some skill on the part of the operator, and therefore automated systems are provided to inject the air directly with steam in order to create a cream. Both the flow rate and the quantity of the air are controlled during injection in order to have different quantities of cream in the milk.

Also the flow rate and the quantity of the air may vary depending on the quantity of milk and on the recipe to be obtained.

In addition, recently there has been an increasing demand for different types of milk, such as those of vegetable origin. If the coffee machine uses different types of milk, the bartender must remember that each type of milk has specific heating modes that are different from each other.

Although the most advanced coffee machines are equipped with buttons to program heating cycle of the milk in the milk jug, according to the quantity and the type of milk, evidently the operator may make mistakes and encounter difficulties in remembering each time the quantity and the type of milk contained in the milk jug.

WO2018211003A1 discloses an apparatus for frothing a quantity of milk in a milk jug. Said apparatus comprise an identification system of the milk jug size comprising an RFID reader mounted in the apparatus and a tag mounted in the milk jug.

The purpose of the present invention is to eliminate the drawbacks of the prior art by providing an assembly having an identification system of a milk jug for a coffee machine that is safe, accurate and reliable.

Another purpose of the present invention is to provide such an assembly having an identification system of a milk jug for a coffee machine that is versatile and capable of recognizing different types of milk jugs used for different quantities and different types of milk.

These purposes are achieved in accordance with the invention with the features of the appended independent claim 1.

Advantageous achievements of the invention appear from the dependent claims.

Further features of the invention will appear clearer from the following detailed description, which refers to its purely illustrative and therefore nonlimiting embodiments, illustrated in the appended drawings, wherein:
Fig. 1 is a diagrammatic perspective view of an identification system of the milk jug of the assembly according to the invention;
Fig. 2 is an exploded perspective view of a milk jug and of a portion of a base of a coffee machine with the identification system of the assembly according to the invention; and
Fig. 3 an exploded side view of a milk jug arranged in a coffee machine provided with the identification system according to the invention.

With the aid of the Figures, the assembly according to the invention, which is comprehensively indicated with reference numeral 100, is described.

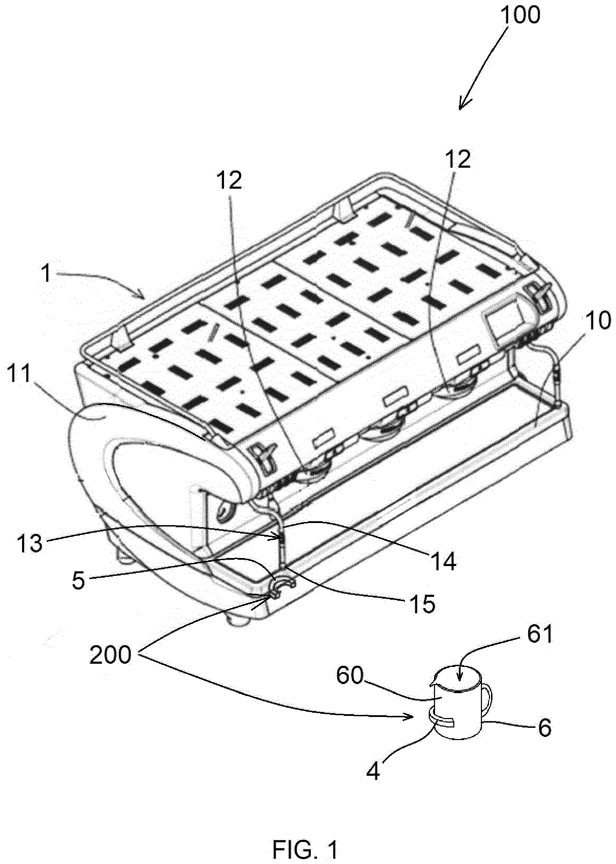

Fig. 1 shows the assembly (100) comprising a coffee machine (1) and a milk jug (6). In addition to the milk jug (6) shown in Fig. 1, the assembly also comprises other milk jugs (6) of different type not shown in Fig. 1.

The milk jug (6) comprises a body (60) in the shape of a cylindrical container that defines a housing (61) for containing milk to be heated.

Based on the volume of the milk jug (6) and on the type of milk to be contained by the milk jug (6), different types of milk jugs can be distinguished, which can be identified by different colors or different identification marks.

The coffee machine (1) comprises a base (10) having a horizontal surface on which the cups that are to be filled with coffee can be placed. A frame (11) protrudes superiorly from the base (10) to support at least one dispensing unit (12) for dispensing hot water for extracting the coffee from a filter holder that is disposed in the dispensing unit (12).

The coffee machine (1) comprises at least one dispensing nozzle (13) suitable for dispensing hot steam to heat and froth the milk contained in the milk jug (6). The dispensing nozzle (13) comprises a tube (14) protruding downwardly from the frame (11) of the coffee machine above the base (10) and a dispensing spout (15) disposed at the end of the tube (14) in order to be inserted into the housing (61) of the milk jug and dispense hot steam to heat and froth the milk contained in the housing (61) of the milk jug.

The coffee machine (1) has a control unit to manage the operation of the coffee machine.

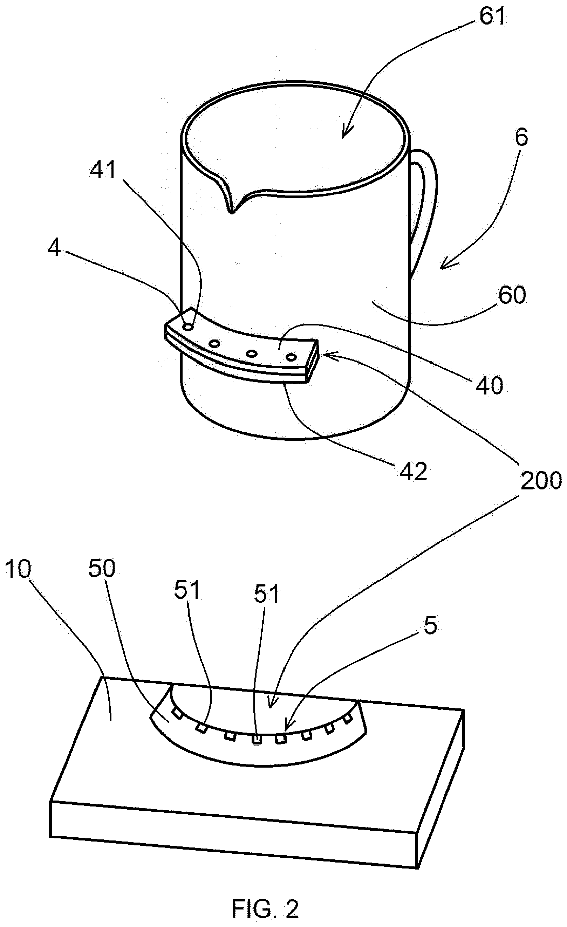

With reference also to Fig. 2, the assembly (100) comprises an identification system (200) comprising two or more magnets (4) arranged on each milk jug (6) and a magnetic reader (5) arranged in the coffee machine (1) near the dispensing nozzle (13). The magnetic reader (5) of the coffee machine is connected to the control unit of the coffee machine.

The milk jugs (6) of different volume that are suitable for containing different types of milk differ from each other in that they have a different number of magnets (4) or a different arrangement of the magnets (4).

When the milk jug (6) is brought close to the magnetic reader (5) of the coffee machine, the magnetic reader (5) of the coffee machine detects the number and/or the arrangement of the magnets (4) and understands which type of milk jug (6) is being used. In view of the above, by knowing the type of milk jug that is being used, the control unit of the coffee machine enables the heating programming button relative to the quantity and type of milk contained in the milk jug or starts automatically a heating program relative to the quantity and type of milk contained in the milk jug.

The body (60) of the milk jug has a cylindrical shape with an axis. The milk jug (6) comprises an element (40) radially projecting outward from a front part of the body (60) of the milk jug. The element (40) is shaped like an arc of a circle with center in the axis of the body of the milk jug. A plurality of seats (41) are formed in the element (40) to accommodate the magnets (4). The magnets (4) are arranged in a row, according to a trajectory shaped like an arc of circle, with center in the axis of the milk jug.

A cover (42) is attached to the element (40) to cover the magnets (4). The cover (42) of the magnets has a low thickness (about 1-5 mm) and is made of a material suitable for being crossed by the magnetic field of the magnets (4).

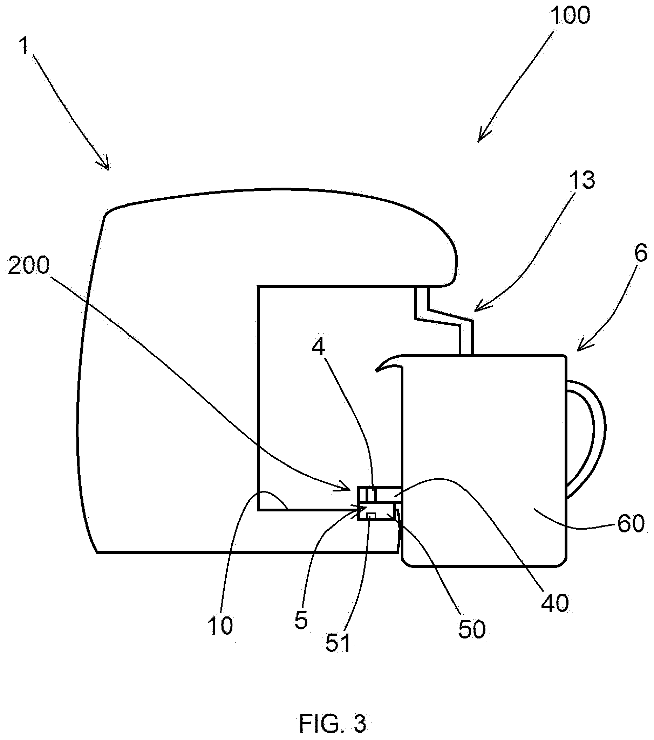

Referring to Figs. 2 and 3, the magnetic reader (5) comprises a printed circuit board (PCB) (50) on which a plurality of magnetic sensors (51) is mounted. By way of example, the magnetic sensors (51) can be Reed sensors or Hall effect sensors suitable for detecting a magnetic field generated by the magnets (4) when approaching the magnetic sensors (51).

The magnetic sensors (51) are arranged in a row, along a trajectory shaped like an arc of circle, with radius of curvature equal to the radius of curvature of the trajectory shaped like an arc of circle of the magnets (4).

The magnetic reader can be placed in a corner of the coffee machine or on the base (10) of the coffee machine.

A cover (52) is attached to the PCB (50) to cover the magnetic sensors (51). The cover (52) of the magnetic sensors has a low thickness (about 1-5 mm) and is made of a material suitable for being crossed by the magnetic field of the magnets (4) when the magnets (4) are close to the cover (52) of the magnetic sensors.

The cover (42) of the magnets and the cover (52) of the magnetic sensors prevent the magnets (4) and the magnetic sensors (51) from getting dirty.

Advantageously, four magnets (4) can be used, that is, a first magnet, a second magnet, a third magnet, and a fourth magnet arranged in a row. In such a case, the magnetic reader (5) is configured to detect the first magnet at the beginning of the positioning of the milk jug in the coffee machine and the fourth magnet at the end of the positioning of the milk jug under the dispensing nozzle of the coffee machine. Therefore, the two intermediate magnets (i.e., the second magnet and the third magnet) can be provided or removed in such a way to have four possible combinations:
1 001,
1101,
1111,
1011

Four more combinations can be obtained if one considers the possibility of reversing the poles of the two intermediate magnets.

Therefore as many as eight different types of milk jugs can be characterized by using four magnets.

Equivalent variations and modifications may be made to the present embodiment of the invention, within the reach of a person skilled in the art, but still within the scope of the invention as expressed by the appended claims.

## Claims

1. Assembly (100) comprising:
- a plurality of milk jugs (6) comprising a body (60) that defines a housing (61) suitable for containing milk to be heated and frothed; said milk jugs being suitable for containing different quantities and different types of milk;
- a coffee machine comprising at least one dispensing nozzle (13) comprising a pipe (14) with a dispensing spout (15) suitable for being arranged in the housing (61) of the body of the milk jug to dispense hot steam and/or air to heat and/or froth the milk contained in the body of the milk jug; and
- an identification system (200);
**characterized in that** said identification system (200) comprises two or more magnets (4) arranged in the body (60) of each milk jug (6) in such a way that the number and/or the arrangement of the magnets (4) uniquely identifies a milk jug based on the quantity and on the type of milk contained in the milk jug and a magnetic reader (5) arranged in the coffee machine; said magnetic reader (5) being configured to detect the number and/or the arrangement of the magnets (4) when the magnets (4) arranged in the body (60) of the milk jug are moved close to the magnetic reader (5);
wherein the magnetic reader (5) is connected to a control unit of the coffee machine configured to receive information from the magnetic reader (5) about the type of milk jug based on the quantity and on the type of milk contained in the milk jug, and enable a button to program a milk heating cycle based on the type of milk jug or automatically start a milk heating cycle based on the type of milk jug and on the recipe associated in terms of quantity and flow rate of the air in the automated heating cycles.

2. The assembly (100) of claim 1, wherein each milk jug (6) comprises an element (40) radially projecting outwardly from the body (60) of the milk jug and provided with a plurality of seats (41) to accommodate the magnets (4).

3. The assembly (100) according to claim 2, wherein the magnets (4) are arranged in a row in said element (40) along a trajectory shaped like an arc of circle with center in an axis of the milk jug.

4. The assembly (100) according to any one of the preceding claims, wherein said magnetic reader (5) comprises a printed circuit board (PCB) (50) on which a plurality of magnetic sensors (51) is mounted.

5. The assembly (100) according to claim 4, wherein the magnetic sensors (51) are arranged in a row along a trajectory shaped like an arc of circle, having a radius of curvature equal to the radius of curvature of a trajectory shaped like an arc of circle of the magnets (4) arranged in the body (60) of each milk jug (6).

6. The assembly (100) according to claim 4 or 5, comprising a cover (42) applied on the element (40) of the milk jug to cover the magnets (4) and a cover (52) applied on the PCB (50) to cover the magnetic sensors (51).

## Patentansprüche

1. Anordnung (100), umfassend:
- eine Vielzahl von Milchgefäßen (6), umfassend einen Körper (60), der einen Sitz (61) zum Aufnehmen von zu erhitzender und aufzuschäumender Milch definiert; wobei die Milchgefäße dazu bestimmt sind, unterschiedliche Mengen und unterschiedliche Arten von Milch aufzunehmen;
- eine Kaffeemaschine, umfassend mindestens eine Ausgabedüse (13), die ein Rohr (14) mit einer Ausgabetülle (15) umfasst, die dazu geeignet ist, in dem Sitz (61) des Körpers des Milchgefäßes angeordnet zu werden, um heißen Dampf und/oder Luft zum Erhitzen und/oder Aufschäumen der in dem Körper des Milchgefäßes enthaltenen Milch auszugeben; und
- ein Erkennungssystem (200);
**dadurch gekennzeichnet, dass** das Erkennungssystem (200) zwei oder mehr Magnete (4) umfasst, die in dem Körper (60) eines jeden Milchgefäßes (6) so angeordnet sind, dass die Anzahl und/oder die Anordnung der Magnete (4) ein Milchgefäß eindeutig basierend auf der Menge und der Art der in dem Milchgefäß enthaltenen Milch identifiziert, und eine magnetische Lesevorrichtung (5), die in der Kaffeemaschine angeordnet ist; wobei die magnetische Lesevorrichtung (5) so konfiguriert ist, dass sie die Anzahl und/oder die Anordnung der Magnete (4) erfasst, wenn die in dem Körper (60) des Milchgefäßes angeordneten Magnete (4) an die magnetische Lesevorrichtung (5) angenähert werden;
wobei die magnetische Lesevorrichtung (5) mit einer Steuereinheit der Kaffeemaschine verbunden ist, die konfiguriert ist, um Informationen von der magnetischen Lesevorrichtung (5) über die Art des Milchgefäßes basierend auf der Menge und der Art der in dem Milchgefäß enthaltenen Milch zu empfangen und eine Taste zum Programmieren eines Milcherhitzungszyklus basierend auf der Art des Milchgefäßes zu aktivieren oder einen automatischen Milcherhitzungszyklus basierend auf der Art des Milchgefäßes und dem Rezept zu starten, das entsprechend der Menge und Strömungsgeschwindigkeit der Luft in den automatischen Heizzyklen zugeordnet ist.

2. Anordnung (100) nach Anspruch 1, wobei jedes Milchgefäß (6) ein Element (40) umfasst, das radial aus dem Körper (60) des Milchgefäßes vorsteht und mit einer Vielzahl von Sitzen (41) versehen ist, um die Magnete (4) aufzunehmen.

3. Anordnung (100) nach Anspruch 2, wobei die Magnete (4) in einer Reihe in dem Element (40) entlang einer Bahn in Form eines Kreisbogens mit Mittelpunkt auf einer Achse des Milchgefäßes angeordnet sind.

4. Anordnung (100) nach einem der vorstehenden Ansprüche, wobei die magnetische Lesevorrichtung (5) eine Leiterplatte (PCB) (50) umfasst, auf der eine Vielzahl von magnetischen Sensoren (51) montiert ist.

5. Anordnung (100) nach Anspruch 4, wobei die magnetischen Sensoren (51) in einer Reihe entlang einer Bahn in Form eines Kreisbogens angeordnet sind, mit einem Krümmungsradius, der gleich dem Krümmungsradius einer Bahn in Form eines Kreisbogens der Magnete (4) ist, die auf dem Körper (60) eines jeden Milchgefäßes (6) angeordnet sind.

6. Anordnung (100) nach Anspruch 4 oder 5, umfassend einen Deckel (42), der auf dem Element (40) des Milchgefäßes angebracht wird, um die Magnete (4) zu bedecken, und einen Deckel (52), der auf der Leiterplatte (50) angebracht wird, um die magnetischen Sensoren (51) zu bedecken.

## Revendications

1. Groupe (100) comprenant :
- une pluralité de récipients à lait (6) comprenant un corps (60) définissant un emplacement (61) pour contenir le lait à chauffer et à mousser ; lesdits récipients à lait étant destinés à contenir des quantités et des types différents de lait ;
- une machine à café comprenant au moins un bec de distribution (13) comprenant un tube (14) avec une buse de distribution (15) apte à être disposé dans l'emplacement (61) du corps du récipient à lait pour distribuer de la vapeur chaude et/ou de l'air pour chauffer et/ou mousser le lait contenu dans le corps du récipient lait ; et
- un système d'identification (200) ;
**caractérisé en ce que** ledit système d'identification (200) comprend deux ou plusieurs aimants (4) disposés dans le corps (60) de chaque récipient à lait (6) de manière que le numéro et/ou la disposition des aimants (4) identifie de manière univoque un récipient à lait en fonction de la quantité et du type de lait contenu dans le récipient à lait et un lecteur magnétique (5) disposé dans la machine à café ; ledit lecteur magnétique (5) étant configuré de façon à relever le numéro et/ou la disposition des aimants (4), quand les aimants (4) disposés dans le corps (60) du récipient à lait sont approchés au lecteur magnétique (5) ;
où le lecteur magnétique (5) est branché à une unité de commande de la machine à café configurée pour recevoir des informations de la part du lecteur magnétique (5) sur le type de récipient à lait en fonction de la quantité de lait contenu dans le récipient à lait et du type de lait contenu dans le récipient à lait et activer un poussoir de programmation d'un cycle de chauffage du lait en fonction du type de récipient à lait reconnu ou activer en automatique un cycle de chauffage du lait en fonction du type de récipient à lait reconnu et à la recette associée tant en ce qui concerne la quantité que le débit d'air dans les cycles de chauffage automatisés.

2. Groupe (100) selon la revendication 1, où chaque récipient à lait (6) comprend une ailette (40) qui déborde radialement vers l'extérieur depuis le corps (60) du récipient à lait et dans l'ailette (40) il y a une pluralité d'emplacements (41) qui logent les aimants (4).

3. Groupe (100) selon la revendication 2, où les aimants (4) sont disposés en rangée dans ladite ailette (40), selon une trajectoire en arc de cercle, avec le centre dans un axe du récipient à lait.

4. Groupe (100) selon l'une quelconque des revendications précédentes, où ledit lecteur magnétique (5) comprend un circuit imprimé (PCB) (50) sur lequel une pluralité de capteurs magnétiques (51) sont montés.

5. Groupe (100) selon la revendication 4, où les capteurs magnétiques (51) sont disposés en rangée, en suivant une trajectoire en arc de cercle, avec rayon de courbure égal au rayon de courbure d'une trajectoire en arc de cercle des aimants (4) disposés dans le corps (60) de chaque récipient à lait (6).

6. Groupe (100) selon la revendication 4 ou 5, comprenant un couvercle (42) appliqué sur l'ailette (40) du récipient à lait pour couvrir les aimants (4) et un couvercle (52) appliqué sur le circuit imprimé (PCB) (50) pour couvrir les capteurs magnétiques (51).
